# EUROPÄISCHE PATENTANMELDUNG

(11) **EP 4 782 643 A1**
(43) Veröffentlichungstag der Anmeldung: **29.07.2026**
(21) Anmeldenummer: 25224261.5
(22) Anmeldetag: 17.12.2025
(51) Int. Cl.: E06B 9/24, E06B 9/386, F24S 40/52, F24S 50/80, G12B 1/00

(54) **BLENDENANORDNUNG UND HERSTELLUNGSVERFAHREN DAFÜR**

(30) Priorität: 24.01.2025 DE 102025102539
(71) Anmelder: Karlsruher Institut für Technologie, Körperschaft des öffentlichen Rechts, 76131 Karlsruhe (DE)
(72) Erfinder: Arivanandhan, Gowtham, 76135 Karlsruhe (DE); Joseph, Joel, 76297 Stutensee (DE); Gottwald, Vincent, 76185 Karlsruhe (DE); Kohl, Manfred, 76297 Stutensee (DE)
(74) Vertreter: mepat Patentanwälte

(57) **Zusammenfassung**

Die vorliegende Erfindung stellt eine Blendenanordnung (20) und ein Herstellungsverfahren dafür bereit. Die Blendenanordnung (20) weist eine Mehrzahl Partien aus je einer Aktuatorschicht (12') als Dünnschicht aus einem thermisch aktiven Material und zumindest ein Trägersubstratelement (11) aufweist. Dabei weist jede Partie mit der Aktuatorschicht (12') einen ersten Abschnitt (A1) auf, der mit dem zumindest einen Trägersubstratelement (11) fest verbunden ist, und weist zumindest einen zweiten Abschnitt (A2) auf, der sich von dem zumindest einen ersten Abschnitt (A1) schwenkbar weg erstreckt und wobei eine Schwenkbewegung des zumindest einen zweiten Abschnitts (A2) durch eine Temperaturänderung auslösbar ist.

## Beschreibung

Die Erfindung betrifft eine Blendenanordnung und ein Herstellungsverfahren dafür.

Aus dem Stand der Technik sind Beschattungssysteme bspw. zur Abschattung von Gebäuden gegen Sonnenlicht bekannt, wobei verschiedene Mechanismen zur dynamischen Anpassung an Umgebungsbedingungen oder Benutzerpräferenzen verwendet werden. So gibt es Fenster, die mit einer selbsttönenden Beschichtung versehen sind. Die Beschichtung hat allerdings eine lange Reaktionszeit, so dass der gewünschte Beschattungsgrad nicht zügig erreicht wird, und die Beschichtung unterliegt auf Grund langer UV-Bestrahlung Alterungsprozessen, wodurch mit zunehmender Alterung die Beschichtung an Wirkung verliert.

Weiter sind Formveränderungsvorrichtungen bekannt, die aus sich öffnenden bzw. sich schließenden Polymer-Lamellen aufgebaut sind, wobei jede der Lamellen einen Öffnungsspalt schließt oder öffnet und somit eine Blende bildet, wie sie hierin nachfolgend verstanden wird. Dabei ist der Öffnungs- und Schließmechanismus elektrisch gesteuert und muss aktiv geöffnet bzw. geschlossen werden. Die Öffnungs- und Schließmechanismen dieser Systeme weisen komplexe Mechaniken mit Gestängen auf, um die Lamellen bewegen zu können.

Ausgehend von diesem Stand der Technik ist es Aufgabe der vorliegenden Erfindung, eine verbesserte Blendenanordnung bereitzustellen, die konstruktiv einfach aufgebaut ist.

Diese Aufgabe wird durch eine Blendenanordnung mit den Merkmalen des Anspruchs 1 gelöst.

Ferner wird die weitere Aufgabe eine konstruktiv einfache Blendenanordnung herzustellen, durch das Herstellungsverfahren mit den Merkmalen des unabhängigen Anspruchs 12 gelöst.

Weiterbildungen der Blendenanordnung und des Herstellungsverfahrens sind in den Unteransprüchen ausgeführt.

Nach einer ersten Ausführungsform der erfindungsgemäßen Blendenanordnung weist diese mehrere Partien auf, kurz "eine Mehrzahl" Partien, die jeweils eine Aktuatorschicht als Dünnschicht aus einem thermisch aktiven Material aufweisen, sowie zumindest ein Trägersubstratelement. Dabei hat jede dieser Partien mit Aktuatorschicht einen ersten Abschnitt, der mit dem zumindest einen Trägersubstratelement fest verbunden ist, und zumindest einen zweiten Abschnitt, der sich von dem zumindest einen ersten Abschnitt schwenkbar weg erstreckt. Dabei kann durch eine Temperaturänderung erfindungsgemäß eine Schwenkbewegung des zweiten Abschnitts - es könnte ein Abschnitt sein, es können aber auch zumindest zwei oder mehrere zweite Abschnitte sein - ausgelöst werden.

Ein "thermisch aktives Material" ist ein Material, dessen mechanische Eigenschaften sich temperaturabhängig verändern, es kann auch als thermisches Aktormaterial bezeichnet sein.

"Temperaturänderung" meint hierin eine Änderung der Temperatur der Blendenanordnung oder Teilen davon, initiiert durch eine geänderte Temperatur in dem Material oder durch eine geänderte Umgebungstemperatur. "Umgebungstemperatur" meint hierin die Temperatur der Umgebung, die das Bauteil umgibt.

Unter "Dünnschicht" wird hierin eine Schicht eines festen Stoffes mit Dicken im Mikro- bzw. Nanometerbereich verstanden. Derartige Schichten können z. B. durch Sputtern oder Molekularstrahlepitaxie (MBE) hergestellt werden, wobei sie oft auf ein Trägersubstrat aufgedampft werden.

"Partien" meint hierin Abschnitte der Aktuatorschicht, wenn diese im Fertigungsverfahren unterteilt wird.

Da von den Partien jeweils nur ein Teil mit dem Trägersubstratelement verbunden wird, bildet dieser Teil einen festen, unbeweglichen, sogenannten ersten Abschnitt, wohingegen der Teil oder die Teile der Partie, die nicht mit dem Trägersubstratelement verbunden werden und mithin frei (beweglich) bleiben, als zweiter Abschnitt bezeichnet werden. Diese zweiten Abschnitte können die Schwenkbewegung durchführen.

Es kann beispielsweise ein fester Abschnitt mit zwei flankierenden bewegbaren zweiten Abschnitten vorliegen, bspw. wenn das Trägersubstratelement ein Streifen ist.

Wenn das Trägersubstratelement eine quaderförmige Grundfläche hat oder ein Quader ist, können es auch mehr als drei Abschnitte sein, je nachdem wie das Formgedächtnismaterial der Aktuatorschicht vorgeprägt ist.

Gemäß einer weiteren Ausführungsform der erfindungsgemäßen Blendenanordnung ist das thermisch aktive Material bevorzugt ein intelligentes Material mit nichtlinearem thermischen Verhalten, besonders bevorzugt ein Formgedächtnismaterial. "Intelligent" meint hierin eine Eigenschaft des verwendeten Materials, sich auf geänderte Umgebungsparameter anpassen zu können, wie z. B. auf geänderte Umgebungstemperaturen. "Intelligent" bezieht sich auch auf eine Multifunktionalität des verwendeten Materials, so kann die temperaturabhängige Reaktion des Materials genutzt werden, um Sensor- oder Aktorfunktionen auszuführen.

In der Blendenanordnung entsteht jeweils aus einer Partie aus der Aktuatorschicht, die über ihren ersten Abschnitt mit dem zumindest einen Trägersubstratelement fest verbunden ist, und deren zweite Abschnitte frei schwenkbar sind, quasi mit dem durch das Trägersubstratelement gebildeten "Sockel" eine Blende.

Gemäß einer weiteren Ausführungsform der erfindungsgemäßen Blendenanordnung wird zwischen dem zweiten Abschnitt jeder Blende, der sich von dem zumindest einen ersten Abschnitt von dem Trägersubstratelement schwenkbar wegerstreckt, und dem Trägersubstratelement ein Schwenkwinkel α ausgebildet, der in einem Bereich von -10° bis 95° liegt: Dabei wird bei einem Schwenkwinkel von 0° zwischen den ersten und dem, oder den zweiten Abschnitt(en) ein Offen-Zustand bereitgestellt, und bei einem Schwenkwinkel, der in einem Bereich von über 15° liegt, und der bevorzugt in einem Bereich von 35° bis 95°, besonders bevorzugt bei 90° liegt, wird ein Geschlossen-Zustand bereitgestellt. Der Schwenkwinkel kann auch in einem Bereich zwischen 20° und 90°, bevorzugt zwischen 50° und 90°, besonders bevorzugt zwischen 80° und 90° liegen.

Die Wirkung der Blende kann mit einem Sonnenschirm verglichen werden, der geöffnet Schutz vor Sonneneinstrahlung bietet. Dann wird der zweite Abschnitt, oder werden die zweiten Abschnitte, der bzw. die sich von dem Trägersubstratelement schwenkbar wegerstrecken, mit dem Trägersubstratelement einen Schwenkwinkel α ausbilden, der in einem Bereich von 0° liegt - alle ersten und zweiten Abschnitte bilden quasi eine Fläche oder Ebene und verdecken somit eine unter den schwenkbaren Abschnitten liegende Ausnehmung. Licht wird nicht hindurchgelassen. Ein Abschattungseffekt entsteht.

Geschlossen faltet sich der Stoff des Sonnenschirms zusammen, wie eben auch eine einzelne Blende, wenn keine Sonneneinstrahlung bzw. eine niedrigere Temperatur als die Aktivierungstemperatur (nachfolgend auch Umwandlungstemperatur) der Aktuatorschicht vorliegt. Dann wird der zweite Abschnitt, oder werden die zweiten Abschnitte, der bzw. die sich von dem Trägersubstratelement schwenkbar wegerstrecken, vom Trägersubstrat weg erstreckt und es kann sich ein Schwenkwinkel von bis zu 90° ausbilden, so dass bei zwei zweiten Abschnitten, die jeweils an zwei Enden eines ersten Abschnitts anliegen, eine U-Form gebildet wird - der Geschlossen-Zustand in Bezug auf "den Sonnenschirm" erlaubt den Licht-Durchtritt durch eine unter den schwenkbaren zweiten Abschnitten liegende Ausnehmung.

Wenn das Trägersubstratelement streifenförmig ist und viele solcher Blenden enthält, ergeben sich durch das Verschwenken der zweiten Abschnitte also entsprechend viele U-Formen. In einer anderen Ausführungsform können die Abschnitte auch unterschiedlich groß sein oder es liegt nur ein einziger verschwenkbarer Abschnitt vor, so dass die Blendenvorrichtung in ihrem geschlossenen Zustand im Querschnitt L-förmig ist.

Die Form der Abschnitte ist je nach gewünschter Abschattung wählbar. So kann ein zweiter Abschnitt, der schwenkbar ist, rechteckig, quadratisch, dreieckig oder auch halbkreisförmig sein. Der erste Abschnitt, an dem der/die zweite(n) Abschnitt(e) angelenkt bzw. verbunden sind kann quaderförmig, streifenförmig oder auch anderweitig flächig ausgebildet sein.

Vorteilhaft ist so die erfindungsgemäße Blendenanordnung konstruktiv sehr einfach und kann in einer Sonnenschutzvorrichtung für ein Gebäude oder als Sichtschutz verwendet werden, es sind vielfältige Anwendungen denkbar. Vorteilhaft bildet die zumindest eine Aktuatorschicht mit zumindest einer weiteren Schicht einen flächigen Schichtverbund, der auf dem Trägersubstratelement angeordnet ist. Der Schichtverbund hebt sich durch eine kompakte Baugröße hervor und stellt Miniaturisierungspotential bereit, insbesondere für die Anwendung in einer Folie oder als Schichtverbund auf mehrfachverglasten Scheiben. Die weitere Schicht kann eine Schicht mit einer niedrigen linearen thermischen Antwort sein. In jeder Blende wird, wenn die Umgebungstemperatur erreicht wird, bzw. die Umgebungstemperaturänderung, die Schwenkbewegung der Aktuatorschicht bzw. des Schichtverbunds ausgelöst. Dazu ist die Aktuatorschicht entsprechend vorgebogen, um sich ab einem bestimmten Temperaturbereich bzw. ab einer bestimmten Aktivierungstemperatur oder auch Umwandlungstemperatur zu biegen, abhängig davon welches Formgedächtnismaterial verwendet wird. In dem Fall, dass die Blende einen Sonnenschutz abbilden soll, schwenkt der betreffende Abschnitt auf, so dass der Schichtverbund eine Fläche ergibt, an der Sonnenstrahlen reflektieren können und teilweise absorbiert werden. Fällt die Umgebungstemperatur wieder, da die Sonneneinstrahlung verschwindet, unter die Umwandlungstemperatur, klappt die Aktuatorschicht wieder zusammen.

Es kann ausreichen, dass die Blende nur die Aktuatorschicht zur Ausbildung der ersten und zweiten Abschnitte aufweist.

Nach einer noch weiteren Ausführungsform der erfindungsgemäßen Blendenanordnung kann diese aber außer der Aktuatorschicht mit zumindest einer weiteren Schicht einen flächigen Schichtverbund bilden, der entsprechend auf dem Trägersubstratelement angeordnet ist.

Dabei kann nach einer weiteren Ausführungsform der erfindungsgemäßen Blendenanordnung die zumindest eine weitere Schicht des flächigen Schichtverbunds eine Vorspannschicht sein, die in Bezug auf das Trägersubstratelement über der zumindest einen Aktuatorschicht angeordnet ist. Die Vorspannschicht gibt der Aktuatorschicht vorteilhaft vor allem Stabilität und ein Rückstellmoment. Je nach Anwendung können die Schichten in einer vorbestimmten Reihenfolge vorliegen oder auch mehrfach übereinanderliegen, je nachdem wie die Blende der Witterung ausgesetzt sein kann oder welche Stabilität des geöffneten Zustands erreicht werden soll.

Nach einer weiteren Ausführungsform der erfindungsgemäßen Blendenanordnung weist diese keinen elektromotorischen Antrieb auf. Die Blendenanordnung umfasst bevorzugt auch keinen hydraulischen, dielektrischen oder anderweitigen Primärantrieb. Jede Blende der Blendenanordnung ist durch die Aktuatorschicht mit einem Formgedächtnismaterial erfindungsgemäß so ausgebildet, dass dessen Zustandsänderung bevorzugt gesteuert durch eine Änderung der Umgebungstemperatur erfolgt. Eine Impulsgebung durch einen elektrischen Impuls bzw. einer Steuerung mittels einer elektrischen Schaltung allein zur Zustandsänderung vom geschlossenen Zustand in den offenen Zustand und zurück ist vorteilhaft nicht notwendig, wodurch die Blendenanordnung besonders energiearm arbeiten kann.

Das Formgedächtnismaterial der Aktuatorschicht ist charakterisiert durch seine Fähigkeit, eine ursprüngliche Form nach einer quasi-plastischen Verformung wiederherzustellen, wenn ein bestimmter Auslöseimpuls angewendet wird. Diese Materialien können unterteilt werden in Formgedächtnislegierungen (SMA) und Formgedächtnispolymere (SMP). Für Formgedächtnislegierungen ist ein typischer Auslöseimpuls eine Erwärmung des Materials durch einen externen Energieeintrag. Die Erwärmung der Umgebungstemperatur und damit des Formgedächtnismaterials kann durch Wärmestrahlung, thermische Konvektion, Wärmeleitung oder Joule-Erwärmung erfolgen.

Das Formgedächtnismaterial der Aktuatorschicht kann nach noch einer weiteren Ausführungsform der erfindungsgemäßen Blendenanordnung eine Legierung sein, die bevorzugt Ti und Ni enthält, und die ihre Phasenumwandlungstemperatur in einem Temperaturbereich zwischen 0 °C und 130 °C hat. Bspw. kann eine Dünnschicht mit Ti-Ni vorgesehen sein. Die Dicke der Dünnschicht ist abhängig von deren maximalem Biegeradius, der begrenzt ist durch die maximale Dehnung der Legierung.

Weitere Beispiele für mögliche Legierungen sind neben Ti-Ni: Auf Ti-Ni basierende Legierungen, wie z. B.Ni-Ti-Cu, Ni-Ti-Hf, Ni-Ti-Fe, Ni-Ti-Cu-Co oder auch Heusler-Legierungen, wie z. B. Ni-Mn-Ga, Ni-Mn-In, Ni-Mn-In-Co.

Alternativ kann die Aktuatorschicht auch in zwei Richtungen nach einem speziellen thermo-mechanischen Training verschwenkt werden, je nachdem welche Legierungen verwendet werden und ob ein Kombimaterial verwendet wird.

Die Vorspannschicht ist nach einer weiteren Ausführungsform der erfindungsgemäßen Blendenanordnung eine strukturierte Dünnschicht aus einem Material, deren maximale Verformung größer als 10 % ist und die in einem Temperaturbereich zwischen -50 °C und 150 °C temperaturstabil ist. Die Verformung kann reversibel oder wiederherstellbar, bevorzugt elastisch sein. Es können auch Materialien mit nichtlinearer Elastizität oder mit superelastischen Eigenschaften genutzt werden.

"Temperaturstabil" heißt hierbei, dass das Material seine physikalischen Eigenschaften in dem vorbenannten Temperaturbereich nicht ändert oder nur minimal ändert, so dass die Funktionalität des Materials in diesem Temperaturbereich erhalten bleibt. Die Vorspannschicht wird in ihrer spannungsfreien Form wie die Aktuatorschicht gebogen und fungiert als eine Art Federschicht. Wird die Aktuatorschicht ausgelöst, wird die Vorspannschicht in die von der Aktuatorschicht vorgegebenen Form gebogen. Dabei wird die spannungsinduzierte Energie im Biegebereich gespeichert. Das von der Vorspannschicht induzierte Drehmoment ist kleiner als das von der Aktuatorschicht im "erwärmten Zustand" (Temperatur oberhalb der Umwandlungstemperatur der Aktuatorschicht) erzeugte, aber größer als das von der Aktuatorschicht im "kalten Temperaturbereich" (Temperatur unterhalb der Auslösetemperatur der Aktuatorschicht) erzeugte Drehmoment.

Das Gleiche gilt für das Substrat des Trägersubstratelements nach noch einer weiteren Ausführungsform der erfindungsgemäßen Blendenanordnung: Dieses besteht aus einem starren oder elastischen Material und ist in einem Temperaturbereich zwischen -50 C und 150 °C temperaturstabil. Das Trägersubstratelement dient dazu, dass sich der Schichtverbund frei verschwenken kann. Darüber hinaus verbindet das Trägersubstratelement die Schichten des Schichtverbundes in dem gemeinsamen ersten Abschnitt mechanisch miteinander, hält sie an Ort und Stelle und nimmt das entstehende mechanische Drehmoment auf, wenn die zweiten Abschnitte bei Temperaturänderung verschwenken bzw. sich verformen. Die Vorspannschicht kann aus einem Elastomer, wie z. B. PDMS, Silikon, Naturkautschuk oder superelastische Formgedächtnislegierungen, bestehen. Ebenso kann die Vorspannschicht aus Materialien mit geringerer maximaler reversibler Dehnung, die als 2D-Federelement strukturiert wurden, bestehen; so sind auch nicht-lineare elastische Materialen denkbar. Beispielmaterialien für das Trägersubstrat sind Glas, Quarz-Glas, PC, PMMA und weitere transparente Materialien.

Der Schichtverbund weist in einer weiteren Ausführungsform der erfindungsgemäßen Blendenanordnung eine oder mehrere funktionale Schicht(en) auf, wobei eine funktionale Schicht als abschließende Schutzschicht ausgebildet ist. Dies können bspw. Schutzschichten sein. Es kann ein stark reflektierendes Material verwendet werden, mit dem die Hitzeeinwirkung von auftreffenden Sonnenstrahlen auf ein Gebäude reduziert werden kann. Die Schutzschicht kann je nach Anwendungsbereich beispielsweise aus Silizium (Solar-Energiegewinnung), Al, Ag, Au, (Reflexion), Blei-Zirkonat-Titanat (Energiegewinnung), Graphit, Carbon-Schwarz (Solar-Absorber) bestehen.

Die erfindungsgemäße Blendenanordnung verfügt also über mehrere oder viele Blenden, die durch Sonnen- oder Lichteinstrahlung in einen Geschlossen- oder Offenzustand übergehen und damit Sonnen- oder Sichtschutz für bspw. eine Gebäudeverglasung oder einzelne Glasscheiben bilden.

Die Blendenanordnung ist als konstruktiv einfach aufgebauter, selbstaktuierbarer, adaptiver Mechanismus konzipiert, der sich durch die Nutzung der Sonnenenergie selbst seine Form anpassen kann. Es wird keine externe Energie, außer der Sonnenenergie, benötigt. Die Blendenanordnungen können auf bestehende Fenster (durch Nachrüsten) aufgesetzt oder in neue Fenster integriert werden. Bei niedrigeren Temperaturen (die unter der Umwandlungstemperatur bzw. Phasenumwandlungstemperatur des verwendeten Formgedächtnismaterials liegen) sind die Blendenanordnungen zusammengefaltet, so dass ein Großteil der Sonnenstrahlen durch das Fenster dringt und auch die Wärme der Sonne hindurchdringt. Dies ist ideal am frühen Morgen oder im Winter, wenn die Sonne dazu beiträgt, eine angenehme Temperatur in dem Bereich hinter den Fenstern aufrechtzuerhalten. Im Sommer, wenn die Temperatur tagsüber über ein angenehmes Maß hinaus ansteigt, gehen die Blendenanordnungen in die aufgeklappte Form über, die den größten Teil der Sonnenstrahlen blockiert, sobald die Aktivierungstemperatur des verwendeten Formgedächtnismaterials überschritten wird. Das Fenster wird somit automatisch beschattet, indem das Sonnenlicht teilweise oder vollständig blockiert wird. Auf diese Weise kann die Sonne aktiv abgehalten werden, ohne dass zusätzliche Energie für diese aktive Funktion aufgewendet werden muss, da das Gerät selbst aktiv ist. Es können auch nur Teile des Fensters abgeschattet werden, nämlich dann, wenn für einen Teil der Blenden in der Blendenanordnung nur die Blenden auslösen, die dem Sonnenlicht ausgesetzt sind. Die Blenden in der Blendenanordnung, die dem Sonnenlicht nicht ausgesetzt sind, bleiben in ihrer geschlossenen Form, so dass hier noch Licht eintreten kann (aber kein direktes, wärmendes Sonnenlicht). Eine zusätzliche Wirkung dessen ist, dass die erfindungsgemäßen Blendenanordnungen die Verwendung von Fenstern als eine Art "intelligentes Heizmodul" ermöglicht, die den ganzen Tag über eine angenehme Raumtemperatur aufrechterhalten können, indem bis zu einer kritischen Temperatur eine Heizung durch Sonneneinstrahlung erfolgt und oberhalb der kritischen Temperatur die Heizung durch Sonneneinstrahlung gedrosselt oder vollständig unterbunden wird.

Nach einer weiteren Ausführungsform der erfindungsgemäßen Blendenanordnung sind deren Blenden äquidistant mit einem vorbestimmten Abstand d zueinander angeordnet. Bevorzugt bemisst sich der vorbestimmte Abstand nach der Distanz, die eine Abschirmung von bestimmten Wellenlängen, wie bspw. Infrarot-Strahlung (größer 700 nm, d = 350 nm), ermöglicht. Licht kleinerer Wellenlängen wird dann auch bei geöffneter Blende durchgelassen und nur das Licht der eben genannten Wellenlänge geblockt.

Die Blenden können in der Blendenanordnung auch weitere Funktionen übernehmen. So können diese als adaptive Oberflächentechnologie, mikro-omnidirektionaler Förderer mittel lokalem und zeitlich versetztem Energieeintrag Verwendung finden. Im omnidirektionalen Fördermodus werden die Aktoren nacheinander synchronisiert angesteuert, um eine Förderbewegung zu erreichen, die mittels lokaler und zeitversetzter Energiezufuhr digital gesteuert werden kann. In diesem Modus könnte jede Blende mit einer anderen Übergangstemperatur ausgelegt werden, um Dinge mit unterschiedlichen Temperaturen zu sortieren. Dies würde passiv ohne digitale Steuerung funktionieren. Ferner können die Blenden in einem adaptiven Fluidventil eingesetzt werden. Hierfür kann beispielhaft eine lokale Fluidtemperatur verwenden werden, um die Blendenanordnung zu schalten und folglich lokalen Durchfluss nicht zu gewähren oder zu gewähren.

Zusätzlich können mehrere Blenden einer Blendenanordnung oder mehrere Blendenanordnungen eines größeren Verbundes aus solchen Blendenanordnungen mittels einer elektrischen Schaltung untereinander verbunden sein, um zusätzliche Funktionen zu ermöglichen. So können die Blenden auch bei niedriger Umgebungstemperatur (T1 kleiner TA) durch einen elektrischen Impuls in ihre Offenposition gebracht werden, was insbesondere für Sichtschutzelemente, z. B. Paravents, und Sichtschutzfenster genutzt werden kann. Dabei kann die Dauer eines solchen Impulses der Dauer des Offen-Zustandes entsprechen. Die Blende kann auch zur Schaffung eines aktiven Displays (ggf. unter Verwendung einer funktionalen Schicht) verwendet werden, da auch nur ein Teil der Blendenanordnungen in der Blendenanordnung in den offenen Zustand versetzt werden kann, wie es bspw. vom Prinzip her in einem Flüssigkristalldisplay der Fall ist.

Die Erfindung betrifft ferner ein Verfahren zur Herstellung einer erfindungsgemäßen Blendenanordnung mit einer Mehrzahl erfindungsgemäßer Blenden.

Das Verfahren umfasst dabei die folgenden Schritte:
a) Bereitstellen eines ersten Transfer-Substrates, darauf Aufbringen einer Opferschicht, und auf die Opferschicht Aufbringen einer Aktuatorschicht,
b) Einbringen von ersten Ausnehmungen in vorbestimmten Abständen in die Aktuatorschicht, dadurch Bilden der Mehrzahl Partien der Aktuatorschicht,
c) auf die Partien der Aktuatorschicht Aufbringen einer thermisch ablösbaren Trennschicht und darauf Aufbringen eines zweiten Transfer-Substrates, dabei Ausbilden eines Verbundes aus der Trennschicht und dem zweiten Transfer-Substrat,
d) Einbringen von zweiten Ausnehmungen in vorbestimmten Abständen in den Verbund,
e) von den Partien der Aktuatorschicht Ablösen des ersten Transfer-Substrates durch Auflösen der Opferschicht,
f) Einführen von Manipulatorpins in die zweiten Ausnehmungen und
   f1) Bereitstellen eines dritten Transfer-Substrates, von dem weg sich in vorbestimmten Abständen Haltepins erstrecken, und
   Aufsetzen der Haltepins mittig auf die Partien der Aktuatorschicht,
g) weiter Durchführen der Manipulatorpins durch die zweiten Ausnehmungen, dabei Festhalten des dritten Transfer-Substrates, dann Umformen der Partien der Aktuatorschicht mit den Enden der Haltepins des dritten Transfer-Substrates,
h) Aushärten der geformten Partien der Schicht um die Enden der Haltepins des dritten Transfer-Substrates,
i) Entfernen des zweiten Transfer-Substrates, der Trennschicht sowie der Manipulatorpins,
j) fest Verbinden der ersten Abschnitte jeder der Partien der Aktuatorschichten an der von den Haltepins abgewandte Seite der Partien mit dem Trägersubstratelement und Entfernen des dritten Transfer-Substrates mit den Haltepins und schwenkbar sich weg erstrecken lassen der zweiten Abschnitte von dem jeweils ersten Abschnitt und Erhalten der Blendenanordnung.

Dieser Herstellungsprozess kann als Mikrofabrikationsprozess durchgeführt werden. Das Aufbringen der Aktuatorschicht mit Formgedächtnismaterial kann bspw. durch Sputtern oder Direktauftrag erfolgen oder es kann mit einer freistehenden Folie oder Film begonnen werden. Das Aufbringen der weiteren Schichten kann über Abscheidung (Deposition) oder Beschichtung (Coating) erfolgen. Die Temperatur zum Aushärten der Vorspannschicht muss unterhalb der Phasenumwandlungstemperatur der Aktuatorschicht sein. Die Schicht wird bei Raumtemperatur beispielsweise für einen Tag ausgehärtet, kann aber auch in einem kürzeren Zeitraum ausgehärtet werden. Die Aushärtezeit ist jeweils abhängig vom Material. Sie beträgt für NiTi 450 °C beispielsweise 30 Minuten.

Nach noch einer weiteren Ausführungsform des erfindungsgemäßen Verfahrens umfasst das Verfahren nach Schritt e), dem Ablösen des ersten Transfer-Substrates, den weiteren Schritt
e1) Aufbringen der Vorspannschicht auf die Aktuatorschicht.

Hiermit wird der Schichtverbund aus zwei Schichten, nämlich Aktuatorschicht und Vorspannschicht gebildet.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine perspektivische Ansicht einer Blende der erfindungsgemäßen Blendenanordnung in ihrem offenen Zustand,
- **Fig. 2**: eine Seitenansicht der Blende nach Fig. 1,
- **Fig. 3**: eine perspektivische Ansicht der Blende der erfindungsgemäßen Blendenanordnung in ihrem geschlossenen Zustand,
- **Fig. 4**: eine Seitenansicht der Blende nach Fig. 3,
- **Fig. 5**: eine schematische Ansicht einer Anordnung zweier Blenden einer Blendenanordnung im geschlossenen Zustand unter Sonneneinstrahlung,
- **Fig. 6**: eine schematische Ansicht einer Anordnung der zwei Blenden aus Fig. 5 im offenen Zustand unter Sonneneinstrahlung,
- **Fig. 7**: eine perspektivische Ansicht einer weiteren Ausführungsform der Anordnung einer Blende der erfindungsgemäßen Blendenanordnung im offenen Zustand,
- **Fig. 8**: eine perspektivische Ansicht der weiteren Ausführungsform nach Fig. 7 in geschlossenem Zustand,
- **Fig. 9**: eine Seitenansicht noch einer weiteren Ausführungsform der Blende aus Fig. 7 in ihrem offenen Zustand,
- **Fig. 10**: eine Seitenansicht der Blende nach Fig. 8 in ihrem geschlossenen Zustand,
- **Fig. 11**: eine Seitenansicht einer weiteren Ausführungsform der Blende der erfindungsgemäßen Blendenanordnung in ihrem offenen Zustand in einer elektrischen Schaltung,
- **Fig. 12**: eine Seitenansicht der Blende nach Fig. 11 in ihrem geschlossenen Zustand in einer elektrischen Schaltung, und
- **Fig.13 a bis k**: Herstellungsprozess der erfindungsgemäßen Blendenanordnungen.

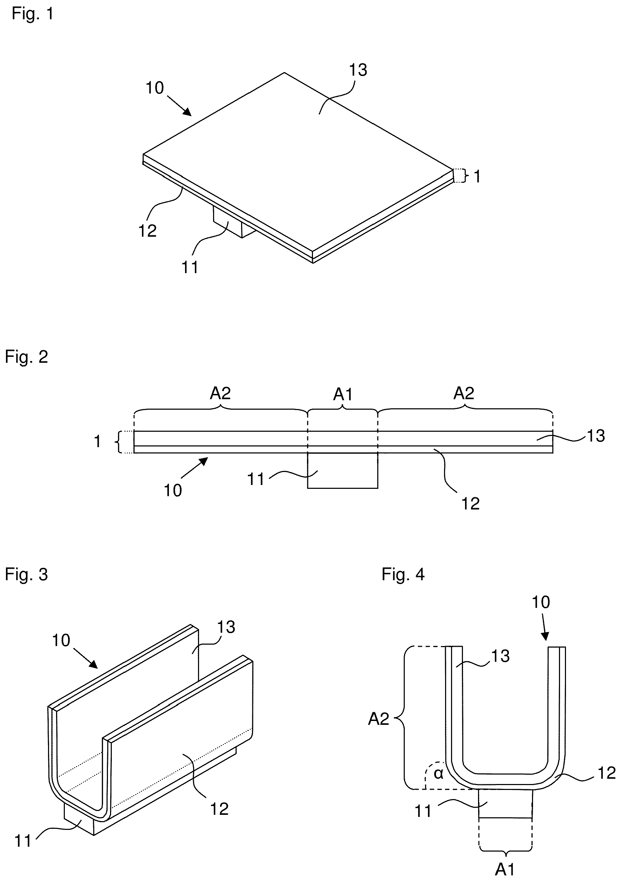

In Fig. 1 bis 4 ist eine Blende 10 in zwei Zuständen gezeigt. Die Blende 10 weist einen flächigen, rechteckigen Schichtverbund 1 auf, der aus einer Partie 12 einer Aktuatorschicht 12' und einer Vorspannschicht 13 gebildet ist. Partie 12 einer Aktuatorschicht 12' und Vorspannschicht 13 bestehen aus Dünnschichten, wobei die Partie 12 der Aktuatorschicht 12' aus einem Formgedächtnismaterial gebildet ist. Der Schichtverbund 1 ist mittig auf einem Trägersubstratelement 11 angeordnet. Das Trägersubstratelement 11 ist hier streifenförmig. Ferner ist der Schichtverbund 1 in einen ersten Abschnitt A1, der mit dem Trägersubstratelement 11 fest verbunden ist, und zwei zweite Abschnitte A2 unterteilt, die sich in Fig. 2 links und rechts zu beiden Seiten des ersten Abschnitts A1 von diesem weg erstrecken. Die zweiten Abschnitte A2 können verschwenkt werden, sie wirken wie an Abschnitt A1 angelenkt, da dieser an dem Trägersubstratelement 11 befestigt ist. Die Verschwenkung erfolgt, wenn das Formgedächtnismaterial der Aktuatorschicht 12' durch eine Umgebungstemperaturänderung aktiviert wird, je nachdem ob die Aktivierungstemperatur TA des verwendeten Formgedächtnismaterials durch die Umgebungstemperaturänderung über- oder unterschritten wird.

Fig. 1 und 2 zeigen einen offenen Zustand der Blende 10, bei der der Schichtverbund 1 flächig vorliegt, und Fig. 3 und 4 einen geschlossenen Zustand der Blende 10, bei der der Schichtverbund 1 nach oben geklappt ist bzw. U-förmig vorliegt. In Fig. 3 und 4 ist gezeigt, dass die beiden zweiten Abschnitte A2 in Bezug auf den ersten Abschnitt A1 um einen Winkel, der dort 90° beträgt, von dem Trägersubstratelement 11 (nach oben in Fig. 4) verschwenkt sind. Der Winkel α liegt zwischen den Abschnitten A1 und A2 vor.

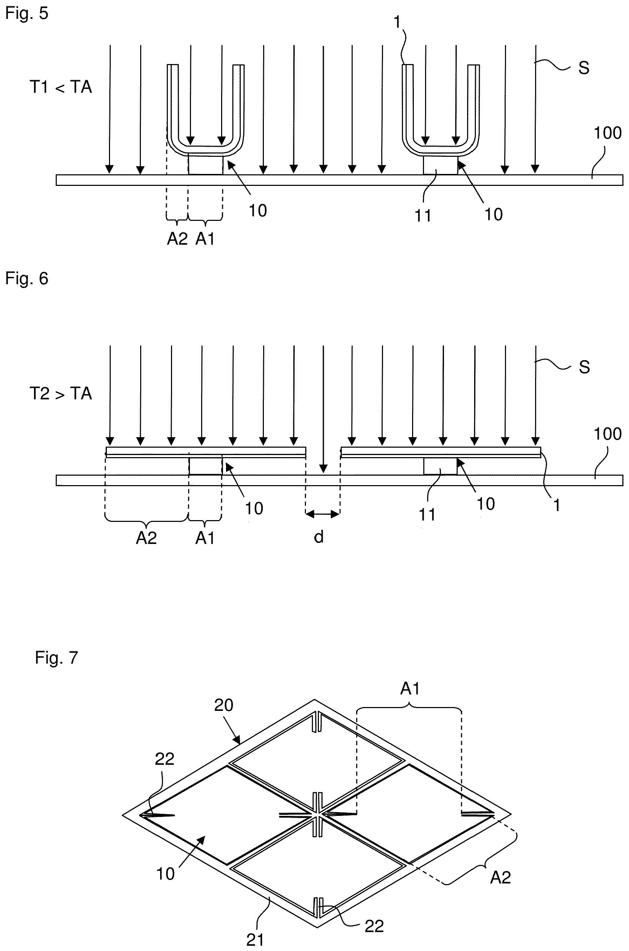

Wie die Zustandsänderung zwischen dem offenen Zustand (Fig. 1 und 2) und dem geschlossenen Zustand (Fig. 3 und 4) von Statten geht, zeigen Fig. 5 und 6: Zwei Blenden 10 in ihrem geschlossenen Zustand sind auf einer Glasscheibe 100 angeordnet, wobei das Trägersubstratelement 11 auf der Glasscheibe 100 aufsetzt. Die beiden zweiten Abschnitte A2 des Schichtverbundes 1 sind in dem geschlossenen Zustand um 90° von dem Trägersubstratelement 11 verschwenkt (in Fig. 5 nach oben). Die beiden Blenden 10 bilden zusammen eine Blendenanordnung, die in Fig. 5 und 6 zur Beschattung der Glasscheibe 100 dienen. Die Glasscheibe 100 und damit auch die Blendenanordnung werden in Fig. 5 mit Sonnenstrahlen S beschienen. Um die Blendenanordnung und vor der Glasscheibe 100 herrscht eine erste Temperatur T1, die der aktuellen Umgebungstemperatur der Blendenanordnung in Fig. 5 entspricht. Diese erste Temperatur T1 ist kleiner als eine Aktivierungstemperatur TA, die der Temperatur entspricht, bei der das Formgedächtnismaterial der Aktuatorschicht 12' der Blende 10 ihre Form, also ihren Zustand ändert. Solange die erste Temperatur T1 kleiner als die Aktivierungstemperatur TA ist, verbleiben die Blenden 10 in ihrem geschlossenen Zustand, der einem geschlossenen Sonnenschirm gleicht, wie Fig. 5 zeigt.

In Fig. 6 ist der Übergang in den offenen Zustand der Blenden 10 gezeigt. Die Sonneneinstrahlung S erhitzt die Glasscheibe 100, so dass die Umgebungstemperatur der Blenden 10 in der Blendenanordnung steigt. Die Umgebungstemperatur steigt, und sobald eine zweite Temperatur T2 der Umgebung über die Aktivierungstemperatur TA steigt, gehen die Blenden 10 von dem geschlossenen Zustand in den offenen Zustand über, bei dem die zweiten Abschnitte A2 sich (von Fig. 5 aus gesehen nach unten) verschwenken und mit dem ersten Abschnitt A1 eine rechteckige Fläche bilden. Die Blenden 10 sind derart nebeneinander angeordnet, dass bei geöffneten Blenden 10 ein vorbestimmter Abstand d zwischen den Schichtverbünden 1 der Blenden 10 vorliegt. Durch diesen Abstand d wird noch ein Rest Sonneneinstrahlung S durch die Glasscheibe 100 geleitet.

Figurativ nicht gezeigt ist, dass die Blenden in ihrer Blendenanordnung in größeren oder kleinen Abständen zueinander angeordnet sein können, um nur eine Teil- oder auch eine Vollbeschattung einer oder mehrerer Glasscheibe(n) zu ermöglichen.

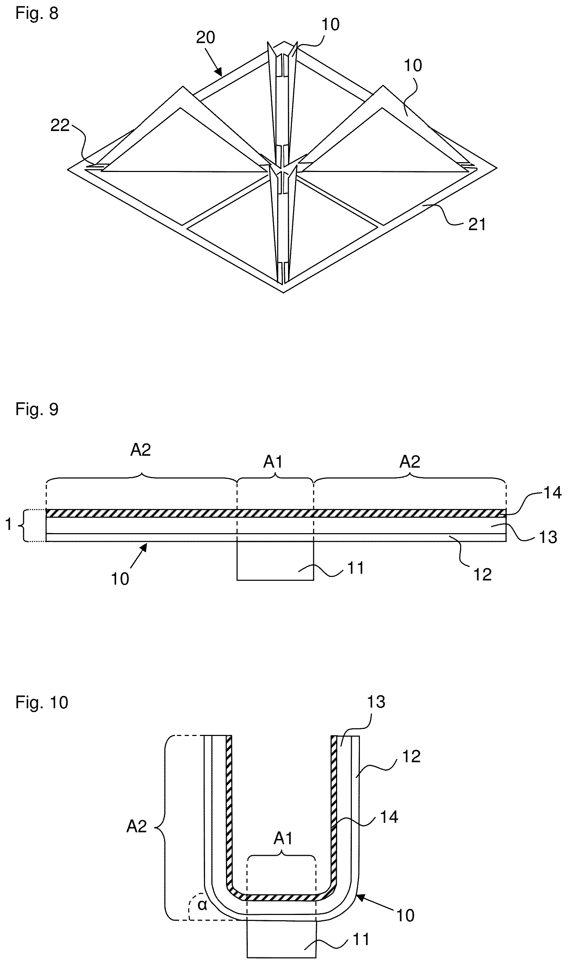

In Fig. 7 und 8 ist eine weitere Blendenanordnung 20 mit dreieckig geformten, verschwenkbaren zweiten Abschnitten A2 gezeigt. Es ist aus Trägersubstrat ein quadratischer Rahmen 21 gebildet, in den Schlitze 22 eingebracht sind. Diese Schlitze 22 sind derart geformt, dass aus dem Rahmen 21 vier Blenden 10 gebildet werden, wovon jede zwei dreieckig geformte zweite Abschnitte A2 und einen streifenförmigen ersten Abschnitt A1 aufweist. In Fig. 7 ist der offene Zustand gezeigt, bei dem eine maximale Schattierung erreicht werden kann. In Fig. 8 ist der geschlossene Zustand gezeigt, bei dem die dreiecksförmigen Abschnitte A2 hochgeschwenkt sind. Zwischen den hochverschwenkten Abschnitten A2 und dem Rahmen 21 sind dann dreickecksförmige Öffnungen gebildet, durch die Licht hindurch scheinen kann.

In der in Fig. 9 und 10 gezeigten Ausführungsform weist die Blende 10 einen Schichtverbund 1 mit der Vorspannschicht 13, der Partie 12 der Aktuatorschicht 12' sowie einer zusätzlichen funktionalen Schicht 14 auf. Diese funktionale Schicht 14 hat keine Funktion in Bezug auf die Schwenkbewegung, die die Partie 12 der Aktuatorschicht 12' auslöst, ist aber so elastisch, dass sie während dieser Schwenkbewegung, ohne dass die funktionale Schicht 14 Schaden nimmt, mitgeführt wird. Die funktionale Schicht 14 dient in Fig. 9 als Schutzschicht für die Partie 12 der Aktuatorschicht 12'.

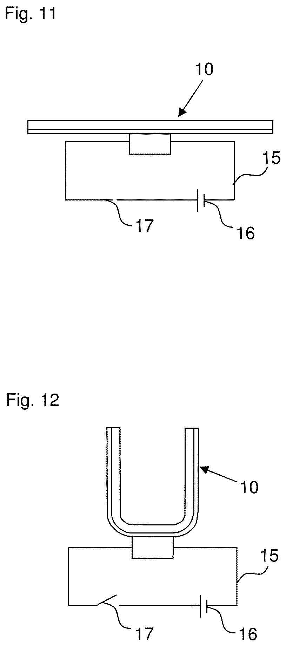

In Fig. 11 und 12 ist die Blende 10 mit einer elektrischen Schaltung 15 verbunden, wobei die elektrische Schaltung 15 eine Stromversorgung 16 und einen Schalter 17 aufweist. Ist der Schalter 17 offen, liegt die Blende 10 in geschlossenem Zustand vor; wird der Schalter 17 geschlossen und damit auch der Stromkreis, wechselt die Blende in den offenen Zustand.

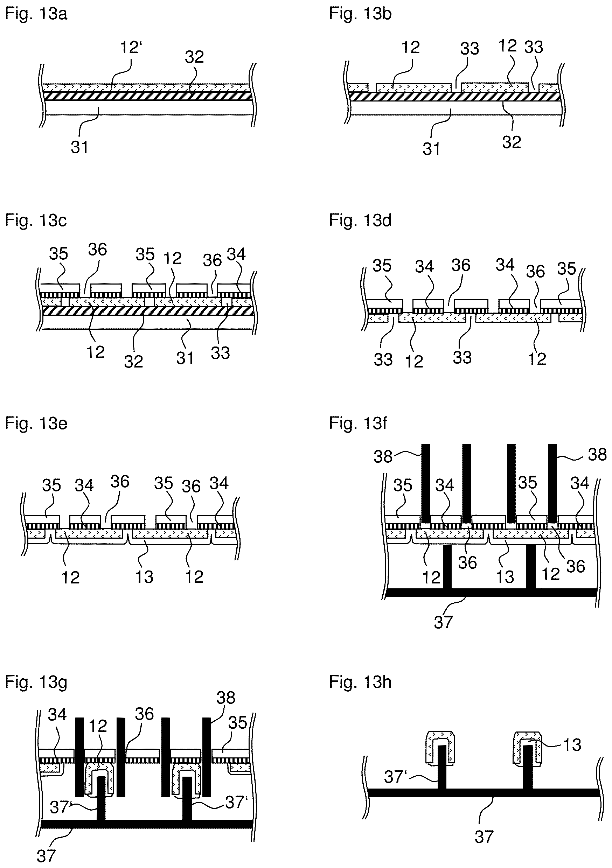

In Fig. 13a bis 13k ist die Herstellung einer Blendenanordnung 20 bestehend aus zwei Blenden 10 gezeigt:
In Fig. 13a ist gezeigt, dass ein erstes Transfer-Substrat 31 bereitgestellt ist, auf das lithografisch eine Opferschicht 32 aufgebracht ist, die später wieder entfernt wird. Beispielmaterialien für die Opferschicht sind Kupfer, Chrom oder PVA. Auf die Opferschicht 32 wird eine Aktuatorschicht 12' abgeschieden. Die Aktuatorschicht 12' ist als durchgängige Dünnschicht des Formgedächtnismaterials vorgesehen, mit einem planaren Zustand des Formgedächtnismaterials ("offener Zustand" in der Blendenanordnung).

Hiernach werden, wie in Fig. 13b gezeigt, in die Aktuatorschicht 12' erste Ausnehmungen 33 in vorbestimmten Abständen eingebracht, so dass Partien 12 aus Formgedächtnismaterial gebildet werden.

Auf diese Partien 12 wird eine thermisch ablösbare Trennschicht 34 sowie ein zweites Transfer-Substrat 35 lithografisch aufgebracht (Fig. 13c). Die Trennschicht 34 sowie ein zweites Transfer-Substrat 35 bilden dabei einen Schichtverbund. In den Verbund V aus thermisch ablösbarer Trennschicht 34 und zweitem Transfer-Substrat 35 werden im gleichen Arbeitsschritt zweite Ausnehmungen 36 in vorbestimmten Abständen eingebracht.

In Fig. 13d ist gezeigt, dass die Opferschicht 32 aufgelöst und damit das erste Transfer-Substrat 31 von den Partien 12 abgelöst wird. Hiernach wird, wie Fig. 13e darstellt, die Vorspannschicht 13 aufgebracht.

In einem nächsten Schritt (Fig. 13f) werden vier Manipulatorpins 38 in die vier dargestellten zweiten Ausnehmungen 36 (von unten) eingeführt. Ferner wird ein drittes Transfer-Substrat 37 bereitgestellt, das sich davon weg erstreckende Haltepins 37' aufweist. Auf der den Manipulatorpins 38 abgewandten Seite werden jeweils mittig auf die Schichtverbünde aus je einer Partie 12 der Aktuatorschicht 12' und einer Vorspannschicht 13 Haltepins 37' des dritten Transfer-Substrates 37 aufgesetzt.

Weiterhin werden die Manipulatorpins 38 in Fig. 13g weiter durch die zweiten Ausnehmungen 36 hindurchgeführt. Das dritte Transfer-Substrat 37 wird dabei festgehalten. Hierdurch werden die Partien 12 um die Enden der Haltepins 37' des dritten Transfer-Substrates 37 gebogen und der Schichtverbund 1 aus Aktuatorschicht-Partie 12 und Vorspannschicht 13 um- bzw. vorgeformt.

Hiernach erfolgt in einem weiteren Schritt das Aushärten der geformten Partien 12 um die Enden der Haltepins 37' des dritten Transfer-Substrates 37 (Fig. 13h). Das Aushärten der Vorspannschicht erfolgt dabei unterhalb der Phasenumwandlungstemperatur der Aktuatorschicht 12'. Beispielsweise kann das Aushärten bei Raumtemperatur erfolgen, wenn die Umwandlungstemperaturen oberhalb dieser liegen

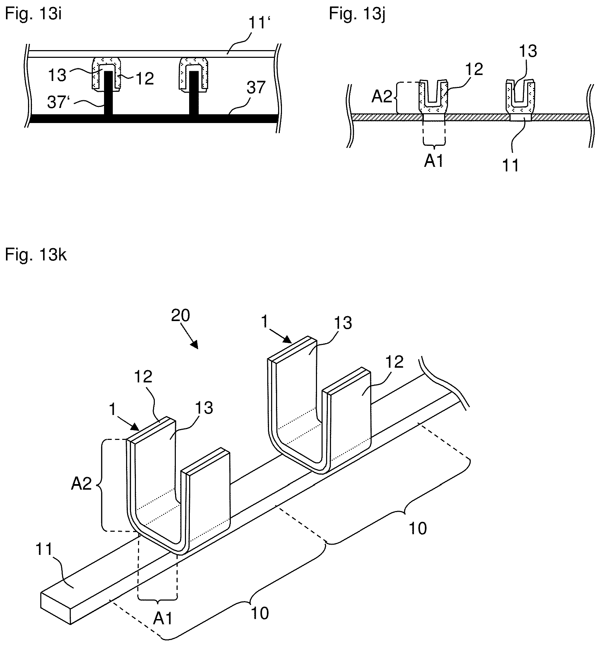

Nach dem Aushärten wird das zweite Transfer-Substrat 35, die thermische Trennschicht 34 sowie die Manipulatorpins 38 entfernt (Fig. 13i). Zum Schluss wird mit den Partien 12 an ihrer der Haltepins 37' abgewandten Seite ein Trägersubstrat 11' verbunden und das dritte Transfer-Substrat 37 mitsamt dessen Haltepins 37' entfernt, wie in Fig. 13j gezeigt. Das Trägersubstrat 11' wird derart eingeschnitten, dass unter jedem Schichtverbund 1 ein streifenförmiges Trägersubstratelement 11 vorliegt (in Fig. 13j sind diese Ausnehmungen gestrichelt eingezeichnet). Daraus entsteht dann eine Blendenanordnung 20, die in Fig. 13k beispielhaft als eine Anordnung mit zwei Blenden 10 mit einem gemeinsamen Trägersubstratelement 11 gezeigt ist. Auf dem Trägersubstratelement 11 sind, wie Fig. 13j und 13k als Endprodukt zeigen, durch das vorbeschriebene Verfahren die Schichtverbünde 1 mit Abschnitten A1 und A2 und daraus zwei Blenden 10 gebildet. Dabei ist Abschnitt A1 fest auf dem Trägersubstratelement 11 angeordnet und Abschnitte A2 sind frei verschwenkbar.

Ein beispielhafter, weiterer, nicht figurativ dargestellter Verfahrensablauf kann wie folgt aussehen: SMADünnschichten (entsprechend der Aktuatorschicht) werden auf thermisch ablösbaren Folien auf Siliziumwafern (entsprechend dem Trägersubstratelement) laminiert. Eine Hartmaskenschicht (entsprechend der Opferschicht) aus Chrom (20 nm) und Gold (20 nm) wird auf die SMA-Schicht aufgedampft. Dann wird 1 µm MicroChemicals AZ1505-Fotoresist aufgeschleudert, belichtet und entwickelt. Nach dem Ätzen der Hartmaskenschicht wird die SMA-Schicht durch HF-Nassätzen strukturiert. Die strukturierten Schichten werden auf einen PMMA-Substratrahmen übertragen, der durch UV-Laserschneiden strukturiert worden ist. PDMS (entsprechend der Vorspannschicht) wird auf die SMA-Schicht in flüssigem Aggregatzustand aufgeschleudert. Anschließend wird die PDMS-Schicht vorgebacken. Ein speziell angefertigtes Stiftsubstrat (entsprechend dem Transfersubstrat) wird zum Aufrichten der Demonstratorflügel verwendet. Die PDMS-Schicht wird bei Raumtemperatur 48 Stunden lang ausgehärtet. Im letzten Schritt wird das Stiftsubstrat wieder eingezogen und entfernt.

### BEZUGSZEICHENLISTE

- 1: Schichtverbund
- 10: Blendenvorrichtung
- 11: Trägersubstratelement
- 11': Trägersubstrat
- 12: Partie einer Aktuatorschicht
- 12': Aktuatorschicht
- 13: Vorspannschicht
- 14: funktionale Schicht
- 15: Schaltung
- 16: Stromversorgung
- 17: Schalter
- 20: Blendenanordnung
- 21: Rahmen
- 22: Schlitz
- 31: erstes Transfer-Substrat
- 32: Opferschicht
- 33: erste Ausnehmungen
- 34: Trennschicht
- 35: zweites Transfer-Substrat
- 36: zweite Ausnehmungen
- 37: drittes Transfer-Substrat
- 37': Haltepins
- 38: Manipulatorpins
- 100: Glasscheibe

- d: Distanz
- S: Sonnenstrahlung
- A1: erster Abschnitt
- A2: zweiter Abschnitt
- T1: erste Temperatur
- T2: zweite Temperatur
- TA: Aktivierungstemperatur

## Patentansprüche

1. Blendenanordnung (20),
die eine Mehrzahl Partien aus je einer Aktuatorschicht (12') als Dünnschicht aus einem thermisch aktiven Material
und zumindest ein Trägersubstratelement (11) aufweist,
und wobei jede Partie mit der Aktuatorschicht (12')
- einen ersten Abschnitt (A1) aufweist, der mit dem zumindest einen Trägersubstratelement (11) fest verbunden ist, und
- zumindest einen zweiten Abschnitt (A2) aufweist, der sich von dem zumindest einen ersten Abschnitt (A1) schwenkbar weg erstreckt und wobei eine Schwenkbewegung des zumindest einen zweiten Abschnitts (A2) durch eine Temperaturänderung auslösbar ist.

2. Blendenanordnung (20) nach Anspruch 1,
**dadurch gekennzeichnet, dass**
das thermisch aktive Material bevorzugt ein intelligentes Material mit nichtlinearem thermischen Verhalten, besonders bevorzugt ein Formgedächtnismaterial ist.

3. Blendenanordnung (20) nach Anspruch 1 oder 2,
**dadurch gekennzeichnet, dass**
jeweils eine Partie aus der Aktuatorschicht (12'), die den Abschnitt (A1) aufweist, der mit dem zumindest einen Trägersubstratelement (11) fest verbunden ist, mit einem Abschnitt des Trägersubstratelements (11), mit dem der Abschnitt (A1) verbunden ist, eine Blende (10) ausbildet.

4. Blendenanordnung (20) nach zumindest einem der Ansprüche 1 bis 3,
**dadurch gekennzeichnet, dass**
sich zwischen dem zweiten Abschnitt (A2) jeder Blende (10), der sich von dem zumindest einen ersten Abschnitt (A1) von dem Trägersubstratelement (11) schwenkbar wegerstreckt, und dem Trägersubstratelement (11) ein Schwenkwinkel (α) ausbildet, der in einem Bereich von -10° bis 95 ° liegt, wobei
- bei einem Schwenkwinkel von 0° die ersten und zweiten Abschnitte (A1, A2) einen Offen-Zustand bereitstellen und
- bei einem Schwenkwinkel, der in einem Bereich von über 15° liegt, und der bevorzugt in einem Bereich von 45° bis 95°, besonders bevorzugt bei 90° liegt, einen Geschlossen-Zustand bereitstellen.

5. Blendenanordnung (20) nach zumindest einem der Ansprüche 1 bis 4,
**dadurch gekennzeichnet, dass**
die zumindest eine Aktuatorschicht (12') mit zumindest einer weiteren Schicht einen flächigen Schichtverbund (1) bildet,
der auf dem Trägersubstratelement (11) angeordnet ist.

6. Blendenanordnung (20) nach zumindest einem der Ansprüche 1 bis 5,
**dadurch gekennzeichnet, dass**
die zumindest eine weitere Schicht des flächigen Schichtverbunds (1) eine Vorspannschicht (13) aufweist, wobei die zumindest eine Vorspannschicht (13) in Bezug auf das Trägersubstratelement (11) über der zumindest einen Aktuatorschicht (12') angeordnet ist.

7. Blendenanordnung (20) nach zumindest einem der Ansprüche 1 bis 6,
**dadurch gekennzeichnet, dass**
das Formgedächtnismaterial der Aktuatorschicht (12') eine Legierung ist, die bevorzugt Ti-Ni enthält, und die ihre Phasenumwandlungstemperatur in einem Temperaturbereich zwischen 10 °C und 130 °C hat.

8. Blendenanordnung (20) nach zumindest einem der Ansprüche 6 oder 7,
**dadurch gekennzeichnet, dass**
die Vorspannschicht (13) eine strukturierte Dünnschicht aus einem elastischen Material ist, und eine maximale elastische Verformung von über 10 % aufweist und die in einem Temperaturbereich zwischen -50 °C und 150 °C temperaturstabil ist.

9. Blendenanordnung (20) nach zumindest einem der Ansprüche 1 bis 8,
**dadurch gekennzeichnet, dass**
das Trägersubstrat (11) aus einem starren oder elastischen Material besteht und in einem Temperaturbereich zwischen -50 °C und 150 °C temperaturstabil ist, und/oder dass das Trägersubstrat (11) eine Geometrie aufweist, die aus der Gruppe ausgewählt ist, die Längsprofile, Gitterprofile und Kreisprofile aufweist.

10. Blendenanordnung (20) nach zumindest einem der Ansprüche 5 bis 8,
**dadurch gekennzeichnet, dass**
der Schichtverbund (1) eine oder mehrere funktionale Schicht(en) (14) aufweist, wobei eine funktionale Schicht (14) als abschließende Schutzschicht ausgebildet ist.

11. Blendenanordnung (20) nach zumindest einem der Ansprüche 3 bis 10,
**dadurch gekennzeichnet, dass**
die Blenden (10) der Blendenanordnung (20) äquidistant mit einem vorbestimmten Abstand (d) zueinander angeordnet sind.

12. Verfahren zur Herstellung einer Blendenanordnung (20) nach zumindest einem der Ansprüche 1 bis 11,
umfassend die Schritte
a) Bereitstellen eines ersten Transfer-Substrates (31), darauf Aufbringen einer Opferschicht (32) und auf die Opferschicht (32) Aufbringen einer Aktuatorschicht (12'),
b) Einbringen von ersten Ausnehmungen (33) in vorbestimmten Abständen in die Aktuatorschicht (12'), dadurch Bilden der Mehrzahl Partien (12) der Aktuatorschicht (12'),
c) auf die Partien (12) der Aktuatorschicht (12') Aufbringen einer thermisch ablösbaren Trennschicht (34) und darauf Aufbringen eines zweiten Transfer-Substrates (35), dabei Ausbilden eines Verbundes (V) aus der Trennschicht (34) und dem zweiten Transfer-Substrat (35),
d) Einbringen von zweiten Ausnehmungen (36) in vorbestimmten Abständen in den Verbund (V),
e) von den Partien (12) der Aktuatorschicht (12') Ablösen des ersten Transfer-Substrates (31) durch Auflösen der Opferschicht (32),
f) Einführen von Manipulatorpins (38) in die zweiten Ausnehmungen (36) und
f1) Bereitstellen eines dritten Transfer-Substrates (37), von dem weg sich in vorbestimmten Abständen Haltepins (37') erstrecken, und
Aufsetzen der Haltepins (37') mittig auf die Partien (12) der Aktuatorschicht (12'),
g) weiter Durchführen der Manipulatorpins (38) durch die zweiten Ausnehmungen (36), dabei Festhalten des dritten Transfer-Substrates (37), dann Umformen der Partien (12) der Aktuatorschicht (12') mit den Enden der Haltepins (37') des dritten Transfer-Substrates (37),
h) Aushärten der geformten Partien (12) der Aktuatorschicht (12') um die Enden der Haltepins (37') des dritten Transfer-Substrates (37),
i) Entfernen des zweiten Transfer-Substrates (35), der Trennschicht (34) sowie der Manipulatorpins (38),
j) fest Verbinden der ersten Abschnitte (A1) jeder der Partien (12) der Aktuatorschichten (12') an der von den Haltepins (37') abgewandte Seite der Partien (12) mit dem Trägersubstratelement (11) und Entfernen des dritten Transfer-Substrates (37) mit den Haltepins (37') und schwenkbar sich weg erstrecken lassen der zweiten Abschnitte (A2) von dem ersten Abschnitt (A1) und Erhalten der Blendenanordnung (20).

13. Herstellungsverfahren nach Anspruch 12,
wobei nach Schritt e), dem Ablösen des ersten Transfer-Substrates (31),
das Ausführen von Schritt e1), Aufbringen einer Vorspannschicht (13) auf die Aktuatorschicht (12'), erfolgt.
